# EUROPEAN PATENT APPLICATION

(11) **EP 2 765 504 A1**
(43) Date of publication of application: **13.08.2014**
(21) Application number: 13275024.1
(22) Date of filing: 08.02.2013
(51) Int. Cl.: G06F 9/44, G06F 11/30

(54) **A data processing apparatus**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A data-processing apparatus (30; 320) for handling data received in a single shot from a data server (20). The data-processing apparatus (30; 320) is sized and arranged to be manually transferred from the data server (20) to a remote location. The apparatus (30; 320) is configured: to receive (step 160) the data from the data server (20) in a single shot; to perform a management check (steps 170, 180, 190) on the data, in which the data is checked for compliance with at least one pre-defined criterion; and to record the data and the results of the management check (step 200). Optionally, the apparatus (320) is configured to connect to the data server (20) over a communication link (322, 338, 330), the communication link (322, 338, 330) being able to pass data from the server (20) to the apparatus (320), but not being able to pass data from the apparatus (320) to the server (20).

## Description

### FIELD OF THE INVENTION

This invention relates to an apparatus for, and a method of, processing data provided by a data server, and in particular to an apparatus for, and a method of, processing data provided by a data server in a single shot.

### BACKGROUND OF THE INVENTION

Some modern vehicles, for example modern military aircraft, are complex entities. The complexity and cost of the vehicles leads vehicle designers to incorporate many sensors into the vehicle, to monitor the vehicle's operation, condition, performance, to assist with training, and the like. Information produced by that monitoring can be processed in real-time as it is generated or it can be recorded as it is generated, with processing done later on the recorded data.

For example, modern military aircraft generate sensor data that is transmitted, as the data is generated, to a ground-based data server. Each data server typically receives data from a plurality of aircraft, and is referred to as a Squadron Operating Unit (SOU). When the data is to be processed, it is supplied from the SOU to the data-processing apparatus. The data is supplied to the data-processing apparatus on a queued basis, i.e. data is in effect cached in the SOU until a communications path is available, and when a communications path is available, data is sent down it in a "single shot", with no resending possible and no acknowledgement of successful transfer being supplied.

Many stakeholders, for example in the military, in national government departments and in industrial companies, are involved in the operation and manufacture of a complex entity. It is advantageous, for many of those stakeholders, to receive portions of the data recorded in the SOU that relate to their specific interest in the aircraft, e.g. relating to the part or parts that they manufacture or maintain, relating to operational issues, relating to training, or relating to refitting. The data is processed in a processing unit, housed with the SOU, in order to provide stakeholders with data in a form predetermined by the SOU. To achieve maximum operational capability in future operations, interoperability of the aircraft within operational environments is critical. Therefore, an effective and interoperable information environment is key to sustaining operational effectiveness.

The single-shot nature of the delivery of data from the SOU to the processing apparatus raises particular difficulties. In particular, as it is not possible to obtain the data for a second time, it is difficult to identify errors arising from processing of the data.

Accordingly, it would be advantageous to provide an apparatus for, and a method of, processing data provided by a data server in a single shot, in which one or more of the aforementioned disadvantages is eliminated or at least reduced.

### DISCLOSURE OF THE INVENTION

A first aspect of the invention provides a data-processing apparatus for handling data received in a single shot from a data server, the data-processing apparatus being sized and arranged to be manually transferred from the data server to a remote location and being configured to:
a. receive the data from the data server in a single shot;
b. perform a management check on the data, in which the data is checked for compliance with at least one pre-defined criterion;
c. record the data; and
d. record the results of the management check.

In some applications, particularly in military applications, it is important to control the flow of data between computer systems. It may be that the apparatus is configured to be connected to the data server over a communication link, the communication link being able to pass data from the server to the apparatus, but not being able to pass data from the apparatus to the server. International patent application no. PCT/GB2008/050914, published as WO2009/047556A1, describes "data diodes", which allow data to flow in one direction (for example from a lower security classification system to a higher security classification system) but not in the other direction (which could for example compromise the security of the higher security classification system). It may be that the apparatus includes a data diode, the connection to the data server being made via the data diode, thus providing the communication link able to pass data from the server to the apparatus, but not able to pass data from the apparatus to the server. It may be that the data diode is a serial data diode for universal asynchronous receiver transmitter (UART) serial ports. It may be that the data diode is a data diode for an Ethernet or other network port. It may be that the data diode is a data diode for a USB data port. It may be that the data diode comprises: a USB data input port; a first serial data port comprising a positive signal transmit pin and a negative signal transmit pin; USB to UART signal conversion means communicatively coupled between the USB data input port and the first serial data port and operable to convert an input USB data signal into a serial data signal in a desired serial data standard; and a second serial data port comprising a positive signal receive pin and a negative signal receive pin, the positive signal transmit pin being coupled to the positive signal receive pin and the negative signal transmit pin being coupled to the negative signal receive pin, such that there is no return signal path from the second serial data port to the first serial data port. The serial data port pins may be electrically coupled or may be optically coupled. The USB data diode may further comprise a data diode housing in which the USB data input port, the first and second serial data ports, and the USB to UART signal conversion means are provided, the first and second serial data ports being provided within the housing in a locally spaced relationship. Alternatively, the USB data diode may further comprise a data diode input housing and a data diode output housing, the USB data input port, USB to UART conversion means and first serial data port being provided within the input housing and the second serial data port being provided within the output housing. The USB data diode preferably further comprises a coupling cable extending between the input housing and the output housing and adapted to couple the serial data port pins. The USB data diode preferably further comprises a USB data output port and second USB to UART signal conversion means communicatively coupled between the second serial data port and the USB data output port and operable to convert an input serial data signal into a USB data signal. The USB data output port and the second USB to UART signal conversion means are preferably provided in the data diode housing or the data diode output housing. The USB data diode may alternatively further comprise a peripheral component interconnect serial computer bus integrated circuit communicatively coupled to the second serial data port. The or each USB to UART signal conversion means preferably comprises a USB to UART converter integrated circuit. The or each USB to UART signal conversion means preferably further comprises programmable memory means, most preferably an electrically erasable programmable read only memory device. The or each USB to UART signal conversion means preferably comprises USB to RS422 or RS485 signal conversion means. It may be that the data diode is a data diode having the structure and function of a data diode described in WO2009/047556A1. The features of the structure and function of data diodes set out in WO2009/047556A1 are hereby incorporated by reference into the present specification.

It may be that the management check comprises a check that the data is in a valid format. For example, the management check may comprise a check that the data is structured in a predetermined format. It may be that the management check comprises checking the content of the data. For example, the management check may comprise a check that the data does not contain a virus or other malware and/or a check that the data does or does not contain particular predetermined words.

It may be that the data-processing apparatus is or includes a laptop, tablet or other portable computer.

It may be that the apparatus is configured also to identify at least one recipient for the data and to process the data to conform it to at least one requirement of each identified recipient, and optionally to deliver the processed data to the recipient. It may be that the data is processed to conform it to a requirement as to what the processed data delivered to that recipient must contain. It may be that the data is processed to conform it to a requirement as to how the processed data delivered to that recipient must be presented.

It may be that a plurality of recipients for the data is identified, and that at least two of the recipients have different requirements to which the data must be processed to conform.

It may be that in step (c) the data is recorded in the same format as it is received in step (a). It may be that the data is kept in the same format throughout all of the steps of the method. Advantageously, the processed data delivered to the recipient is in the same format as the data originally received from the data server. That eliminates the risk of errors being introduced into the data as a result of conversion of the data from one format into another. It is important to reduce the risk of error in the data, especially if the data is to be used to make decisions or, for example, for forensic investigation after an incident. For example, the data may be in XML format.

It may be that the data server is a secure data server. A secure data server is a data server designed or configured to be more secure than a typical commercial data server. It may be that the data server is a military data server. It may be that the data server is an isolated server, i.e. it may be that there is no direct communications link by which data can be removed from the data server (i.e. all data is removed over an "air gap").

It may be that the management check comprises a check that the data is in a valid format.

It may be that the apparatus is configured also to add information to the data to demonstrate that the integrity of the data has not been compromised. For example, the method may comprise addition of a digital signature and/or a calculated checksum, for future checking. Provision of information for an integrity check enables, for example, checking for data corruption occurring during transfer of the data and checking that no additional, unwanted data has been inadvertently or deliberately injected into the data.

It may be that transfer of the data to the data server, from the data server and/or to the recipient is according to the Simple Object Access Protocol (SOAP), Message Orientated Middleware (MOM) (e.g. Java Message Service JMS), Representational State Transfer (REST), or another publicly available data transfer protocol.

It may be that the data is recorded in an archive.

It may be that the apparatus is configured to be connected to the data server over a wired connection, e.g. a network cable.

A second aspect of the invention provides a method of operating a data-processing apparatus, the data-processing apparatus being sized and arranged to be manually transferred from a data server to a remote location, the method comprising the steps of the apparatus
a. receiving the data from the data server in a single shot;
b. performing a management check on the data, in which the data is checked for compliance with at least one pre-defined criterion;
c. recording the data; and
d. recording the results of the management check.

The method may comprise the step of transferring the data-processing apparatus from the data server to a remote location, for example to the remote location of a recipient of the data.

The method may also comprise the prior step of receiving the data from a vehicle and storing said data on the data server. It may be that the vehicle is an aircraft. It may be that the vehicle is a military vehicle, for example a military aircraft. It may be that the received data is mission data and/or maintenance data. It may be that the received data is relevant to training, maintenance, health management, operations or supply chain management relating to the vehicle.

A third aspect of the invention provides a computer program product configured to cause a data-processing apparatus to carry out the method of the second aspect of the invention.

It will of course be appreciated that features described in relation to one aspect of the present invention may be incorporated into other aspects of the present invention. For example, the method of the invention may incorporate any of the features described with reference to the apparatus of the invention and *vice versa.*

### BRIEF DESCRIPTION OF THE DRAWINGS

Example embodiments of the invention will now be described by way of example only and with reference to the accompanying drawings, of which:
Figure 1 is a schematic illustration of apparatus of an example embodiment of the invention;
Figure 2 is a block diagram of steps in a method of an example embodiment of the invention; and
Figure 3 is a schematic illustration of apparatus of a first alternative example embodiment of the invention.

### DETAILED DESCRIPTION

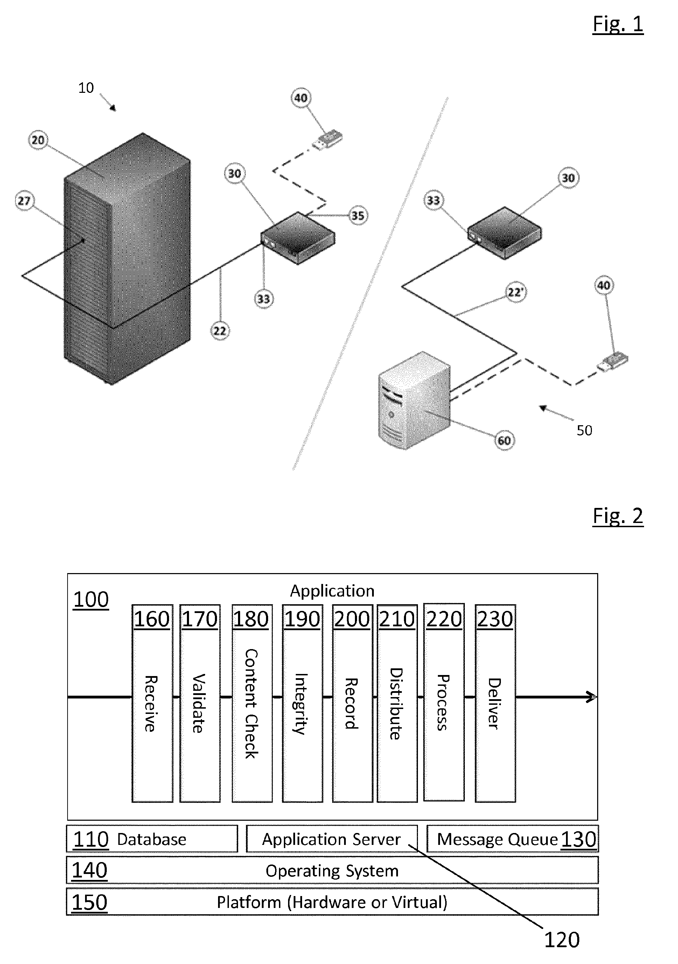

An example embodiment of the invention (Fig. 1) includes data extraction apparatus 10 and end-user apparatus 50. The data extraction apparatus 10 includes a data server in the form of a Squadron Operating Unit SOU 20. The SOU 20 has a network port 27. The data extraction apparatus 10 also includes an Information Data Exchange (IDE) unit 30, having a first network port 33 and a USB port 35 for receiving a USB data store 40. The first network port 33 of the IDE unit 30 is connected via a network cable 22 to the network port 27 of the SOU 20.

Data (in this example mission data and maintenance data) is received from an aircraft (not shown). The data is stored on the SOU 20. The data is received from the SOU 20, via cable 22, by the IDE unit 30 as a SOAP message in XML format. (The IDE unit 30 is also capable of receiving data on USB data store 40.) Within the IDE unit 30, the data is processed according to the method described further below. In this example, the data processing results in one or more messages for one or more end-users. Each message includes at least a portion of the processed data (different end users may receive different portions).

The method carried out in the IDE unit 30 is shown in Fig. 2. The method is carried out by an application 100 which uses a database 110, an application server 120, and a message queue 130. The database 110, application server 120 and message queue 130 run within an operating system 140 operating on a hardware platform 150 (in this example, the hardware platform 150 is the IDE unit 30).

The data is received from the SOU 20 by the application 100 (receive step 160). The application 100 performs a validation check on the format of the stored data (validate step 170), checking for example that the data has the correct fields (e.g. that it is a .csv file having the expected number of columns). The application 100 then checks the data for specific content (content check step 180), performing, in this example a virus check, a check that the data does not include file types that may contain malware (e.g. password-protected files, files containing macros) and a check that the data does not include particular blacklisted words (e.g. words indicating that the data has security classification higher than the SOU 20 is permitted to handle). The application 100 then adds integrity data to the data, to guard against compromise of the data during subsequent transmission (integrity step 190). In this example, a digital signature is added to the data, and a checksum is also calculated and added to the data. The application 100 then records that the data has been received and records the results of the validate step 170, content check step 180, and integrity check 190 (record step 200). If the data fails any of the checks then it is quarantined for examination by a user. If correction or manual approval is possible, the data is then fed back into the chain of steps 160-230.

The application 100 next identifies the end users who are to receive the data and creates a message, including the data, and adds it to the message queue 130 (distribute step 210). The application then processes the data according to the needs of each of the identified end users (process step 220). For example, a US-based end user may require quantities to be stated in gallons, whereas a European-based end user may require the same quantities to be stated in litres; such adjustments are made in the processing step 220.

Note that, throughout the steps 160-220 of the method, the data remains in XML format. The data stored in the record step 200 also remains in that format. By storing the data in the raw format in which it was received, the risks of corruption during format conversion, or due to a change of schema, is eliminated.

The end-user system 50 comprises a computer 60. The IDE unit 30 is physically relocated to the end-user's network, where it is incorporated into the end-user apparatus 50 by connection to the computer 60 via the second network cable 22'.

Finally, the application 100 delivers the data from the message queue 130 by onward transmission to the computer 60 (step 230) over the second network cable 22'. In this example, the data is transmitted on to the end user as a SOAP message.

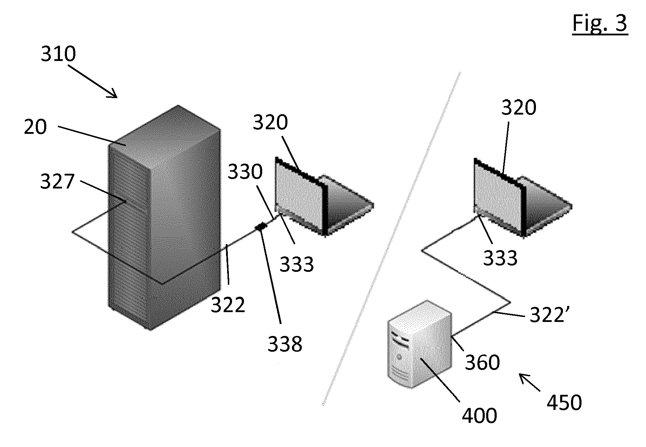

In data extraction apparatus 310 of an alternative example embodiment (Fig. 3), the data is extracted from the SOU 20 using a laptop 320. The laptop 320 has a USB port 333 that is connected via a USB cable 330 to a USB data diode 338. The USB data diode 338 is, in turn, connected via a USB cable 322 to a USB port 327 of the SOU 20.

The USB data diode 338 is configured to allow data to be transferred in only one direction, from the SOU 20 to the laptop 320. Transfer of data in the other direction, from the laptop 320 to the SOU 20 is not possible. Use of the data diode 338 protects the SOU 20, which is a higher security system, from possible compromise by the laptop 320, which is a lower security system.

The laptop 320 runs an application that receives data from the data server 20 in a single shot. The application then performs validate checks, content checks and integrity checks on the received data, as in the embodiment, described above. The application then records the data and the results of the management check.

Unlike in the example embodiment described above, in this example embodiment the distribute step 210 and process step 220 are not carried out at this stage. Rather, the laptop 320 is disconnected from the SOU 20 and removed to a remote site, where it is connected to remote apparatus 450. The SOU 20 is controlled by the operators of the aircraft from which the data originates, whereas the remote site is controlled in this example by a supplier of a system incorporated in the aircraft. At the remote site, the laptop 320 is connected, via its USB port 333 and a USB cable 322' to a USB port 360 of a computer 400 of the supplier. The data is transferred from the laptop 320 to the computer 400. On the computer 400, a second application processes the data to conform to the needs of the supplier, and makes the processed data available for display or printing.

Whilst the present invention has been described and illustrated with reference to particular embodiments, it will be appreciated by those of ordinary skill in the art that the invention lends itself to many different variations not specifically illustrated herein.

For example, in the alternative example embodiment described above, a USB data diode 338 is provided between the laptop 320 and the SOU 20.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may be absent in other embodiments.

## Claims

1. A data-processing apparatus for handling data received in a single shot from a data server, the data-processing apparatus being sized and arranged to be manually transferred from the data server to a remote location and being configured to:
a. receive the data from the data server in a single shot;
b. perform a management check on the data, in which the data is checked for compliance with at least one pre-defined criterion;
c. record the data; and
d. record the results of the management check.

2. An apparatus as claimed in claim 1, configured to be connected to the data server over a communication link, the communication link being able to pass data from the server to the apparatus, but not being able to pass data from the apparatus to the server.

3. An apparatus as claimed in claim 2, including a data diode, the connection to the data server being made via the data diode, thus providing the communication link able to pass data from the server to the apparatus, but not able to pass data from the apparatus to the server.

4. An apparatus as claimed in claim 3, in which the data diode is a serial data diode for universal asynchronous receiver transmitter (UART) serial ports.

5. An apparatus as claimed in claim 3, in which the data diode is a data diode for an Ethernet or other network port.

6. An apparatus as claimed in claim 3, in which the data diode is a data diode for a USB data port.

7. An apparatus as claimed in claim 6, in which the data diode comprises: a USB data input port; a first serial data port comprising a positive signal transmit pin and a negative signal transmit pin; USB to UART signal conversion means communicatively coupled between the USB data input port and the first serial data port and operable to convert an input USB data signal into a serial data signal in a desired serial data standard; and a second serial data port comprising a positive signal receive pin and a negative signal receive pin, the positive signal transmit pin being coupled to the positive signal receive pin and the negative signal transmit pin being coupled to the negative signal receive pin, such that there is no return signal path from the second serial data port to the first serial data port.

8. An apparatus as claimed in any preceding claim, in which the data-processing apparatus is or includes a laptop, tablet or other portable computer.

9. An apparatus as claimed in any preceding claim, configured also to identify at least one recipient for the data and process the data to conform it to at least one requirement of each identified recipient.

10. An apparatus as claimed in any preceding claim, in which the data server is an isolated server.

11. An apparatus as claimed in any preceding claim, in which the management check comprises a check that the data is in a valid format.

12. An apparatus as claimed in any preceding claim, configured also to add information to the data to demonstrate that the integrity of the data has not been compromised.

13. A method of operating a data-processing apparatus, the data-processing apparatus being sized and arranged to be manually transferred from a data server to a remote location, the method comprising the steps of the apparatus:
a. receiving the data from the data server in a single shot;
b. performing a management check on the data, in which the data is checked for compliance with at least one pre-defined criterion;
c. recording the data; and
d. recording the results of the management check.

14. An apparatus as claimed in claim 13, in which the data is kept in the same format throughout all of the steps of the method.

15. A computer program product configured to cause a data-processing apparatus to carry out the method of claim 14.
